# EUROPEAN PATENT SPECIFICATION

(11) **EP 4 242 525 B1**
(45) Date of publication and mention of the grant of the patent: **24.01.2024**
(21) Application number: 22160654.4
(22) Date of filing: 08.03.2022
(51) Int. Cl.: F24D 3/10, F16L 3/00

(54) **MANIFOLD ARRANGEMENT OF A HEATING OR COOLING SYSTEM**
VERTEILERANORDNUNG EINES HEIZ- ODER KÜHLSYSTEMS
AGENCEMENT DE COLLECTEUR D'UN SYSTÈME DE CHAUFFAGE OU DE REFROIDISSEMENT

(43) Date of publication of application: 13.09.2023
(60) Divisional application: 23213344.7
(73) Proprietor: Danfoss A/S, 6430 Nordborg (DK)
(72) Inventor: Clausen, Anders Østergaard, 6430 Nordborg (DK); Hesseldahl, Søren, 6430 Nordborg (DK)
(74) Representative: Keil & Schaafhausen Patentanwälte PartGmbB

(56) References cited:
- EP-A1- 2 196 584
- EP-A1- 3 045 743
- WO-A1-2021/084357
- DE-U1-202013 011 744
- US-A1- 2020 103 123

## Description

The present invention relates to a manifold arrangement of a heating or cooling system comprising a manifold and means for fixing the manifold to a part of a building, wherein the fixing means comprise a mounting rail which rail runs parallel to the manifold.

Such a manifold arrangement is known from EP 2 196 584 A1.

EP 3 045 743 A1 shows a supporting structure for a fluid distributer. The supporting structure comprises a basis running perpendicular to a manifold and carrying a clip element for each manifold. The clip element is fixed to the base.

In a heating or a cooling system the manifold is used to distribute a heat carrying fluid to a number of heating circuits. Such a manifold is in particular useful in connection with a floor heating system. The manifold can be used as a forward manifold or as a return manifold.

For the installation of such a manifold it is not only necessary to connect the manifold with a supply line or a return line, but it is also necessary to fix the manifold in the system in which it is used, in particular in a building.

The object underlying the invention is to allow a simple installation of a heating or a cooling system manifold.

This object is solved with a manifold arrangement as described at the outset and defined in the independent claim.

A mounting rail is a means which is commonly used in connection with installation of electric equipment. The mounting rail can simply be fixed to a wall or a floor of a building or any other system in which the manifold has to be fixed. Once the mounting rail has been fixed, the manifold can be connected to the mounting rail.

The manifold and the mounting rail have the same longitudinal extension.

The mounting clip is used as intermediate part between the mounting rail and the manifold. Thus, a connection between the manifold and the mounting rail is made in two steps. In one step the mounting clip is connected to the mounting rail and in the second step the manifold is mounted to the mounting clip. These two steps can be decoupled, so that the mounting rail can already be prepared for mounting the manifold further facilitating the installation of the manifold.

Clipping a mounting clip on a mounting rail is a very quick and safe way to fix the mounting clip on the mounting rail.

The mounting clip comprises a track arrangement running perpendicular to a longitudinal extension of the mounting rail. The track arrangement can be used to mount the manifold to the mounting clip. the manifold is inserted into the track arrangement and slided to an end position in the track arrangement.

The manifold comprises a mounting member in engagement with the track arrangement. The mounting member is adapted to the track arrangement of the mounting clip.

In an embodiment of the invention the mounting rail comprises a U-shaped cross-section having a base and two flanges at each side of the base, wherein the flanges comprise end sections running parallel to the base. The end sections are arranged at the ends of the flanges opposite to the end at which the base is connected to the flanges. The base can be connected to a wall or a floor of the building, while the flanges and the end sections together can be used to fix the manifold to the mounting rail. Such a mounting rail is commonly known as DIN rail.

In an embodiment of the invention the mounting clip can be slided on the mounting rail in a longitudinal direction of the mounting rail. In other words, when the mounting clip is not in the best position for being connected to the manifold, the position of the mounting clip can be adjusted.

In an embodiment of the invention the mounting clip comprises a track arrangement running perpendicular to a longitudinal extension of the mounting rail. The track arrangement can be used to mount the manifold to the mounting clip. The manifold is inserted into the track arrangement and slided to an end position in the track arrangement.

In an embodiment of the invention the manifold comprises a mounting member in engagement with the track arrangement. The mounting member is adapted to the track arrangement of the mounting clip.

In an embodiment of the invention the manifold comprises a tube and at least one functional part having a housing on an outside of the tube, wherein the mounting member is connected to the housing of the functional part. The functional part can be, for example, pre-setting means, a valve, or a connecting part. This functional part is fixed to the tube of the manifold by means of a housing and the housing in turn is connected to the mounting member.

In an embodiment of the invention the mounting member is integral with the housing of the functional part. When, for example, the housing is made of a plastic material, it is easily possible to integrate the mounting member into the housing.

In an embodiment of the invention the track arrangement comprises at least one groove which is open in a direction parallel to the longitudinal extension of the mounting rail and the mounting member comprises a protrusion arranged in the groove. The groove has one side wall extending parallel to the base of the U-shape of the mounting rail. Thus, this wall prevents the manifold from moving away from the mounting rail.

In an embodiment of the invention the track arrangement comprises an end stop. The mounting member can be inserted into the track arrangement until it reaches the end stop. No further movement of the manifold with respect to the
mounting rail is possible. This facilitates the automatic positioning of the manifold with respect to the mounting rail. The consequence of the correct positioning of the manifold with respect to the mounting rail is that once the mounting rail has been correctly positioned, the manifold is also positioned correctly.

In an embodiment of the invention the mounting clip comprises a protrusion arranged on spring means of the mounting clip. The protrusion is a means to hold the mounting member in the mounting clip. The protrusion can be passed by the mounting member when the mounting member is inserted into the track arrangement. The spring means then moves the protrusion back to a blocking position. When the mounting member has to be demounted, the protrusion can be moved against the force of the spring means to open the track arrangement for removing of the mounting member.

In an embodiment of the invention the means is formed by an elastic arm of the mounting clip. The elastic arm can be made of the same plastic material as the mounting clip itself. Thus, production of the mounting clip is simple.

A preferred embodiment of the invention will now be described with reference to the drawing, in which:
- Fig. 1: shows a mounting rail with mounting clips,
- Fig. 2: shows a manifold and the mounting rail,
- Fig. 3: shows the manifold connected to the mounting rail and
- Fig. 4: shows a larger view of a mounting clip on a mounting rail.

A mounting rail 1 is used to fix a manifold 2 in a certain position in a building, in particular at a wall or a floor of the building, in which the manifold is to be mounted. The manifold 2 can be used as a return manifold or as a forward manifold.

The manifold 2 comprises a tube 3 and a number of functional parts, for example pre-setting means 4 or simply connectors 5. One end of the tube 3 is provided with a spigot 6 having a union nut 7.

Each of the functional parts 4, 5 comprises a housing 8 which is used to connect the manifold 2 to the mounting rail 1.

The mounting rail 1 has a U-shaped cross-section. The u-shaped cross-section comprises a base 9, wherein two flanges 10, 11 extend from the base 9. The flanges 10, 11 comprise end sections 12, 13 which extend parallel to the base 9 and are, in the present example, bent to the outside. The profile of the mounting rail 1 can also be considered as "head profile". Such a mounting rail 1 is also known as "DIN rail".

The base 9 is provided with a number of elongated openings 14 which can be used to fix the mounting rail 1 to the wall or to the floor of a housing or any other system to which the manifold 2 has to be mounted.

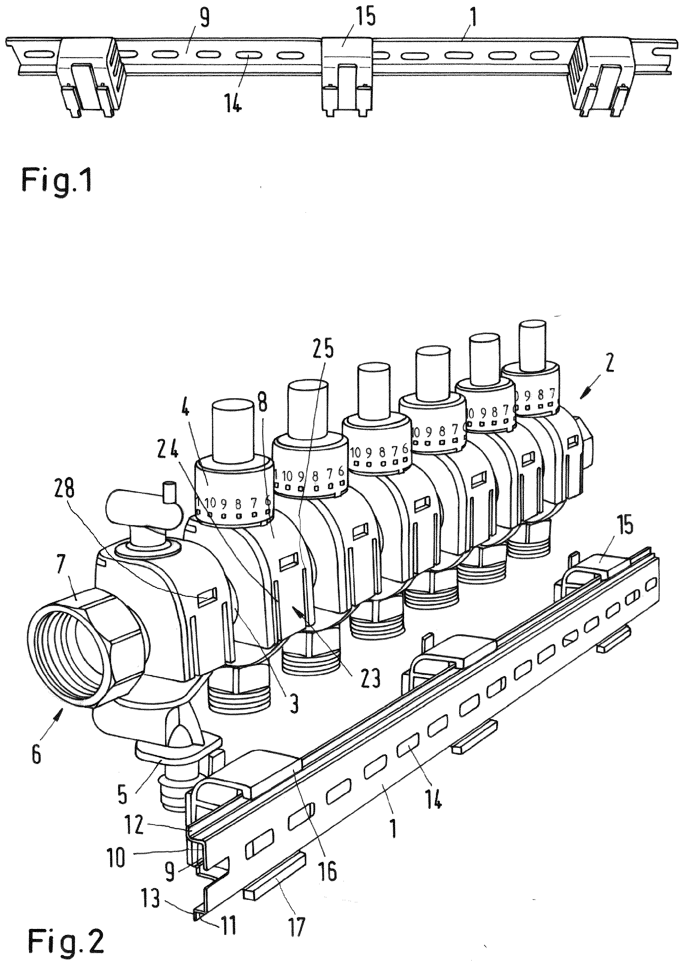

As can be seen in Fig. 1 and 2 a number of mounting clips 15 is mounted to the mounting rail 1. The mounting clips 15 are clipped on the mounting rail 1, i.e. they have hooks 16, 17 that reach behind the end sections 12, 13. The mounting clips 15 can be slided on the mounting rail 1 in a longitudinal direction of the mounting rail 1.

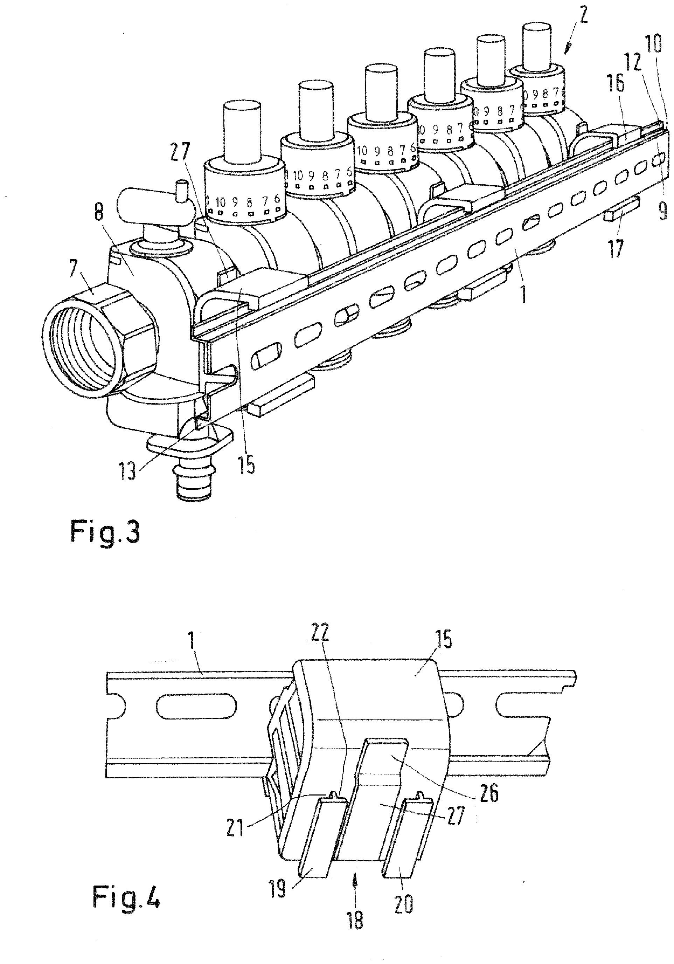

As can be seen in Fig. 4, the mounting clip 15 comprises a track arrangement 18 which runs perpendicular to a longitudinal extension of the mounting rail 1. The track arrangement 18 comprises two T-shaped protrusions 19, 20, each forming two grooves 21, 22 on both sides in longitudinal direction of the mounting rail 1. The grooves 21, 22 are formed between a body of the mounting clip 15 and a cross bar of the T. The housing 8 of the functional part 4, 5 comprises a corresponding counter geometry 23 having slots 24, 25 matching the T-shaped protrusions 19, 20. The counter geometry 23 forms a mounting member which is integral to the housing 8 and can be brought into engagement with the track arrangement 18. Thus, simply by moving the manifold 2 in a direction perpendicular to the longitudinal extension of the mounting rail 1 and by bringing the counter geometry 23 into engagement with the track arrangement 8 it is possible to fix the manifold 2 to the mounting rail 1.

The T-shaped protrusions 19, 20 form at the same time an end stop so that a movement of the manifold 2 onto the mounting clips 15 is stopped when an end of the slots 24, 25 reach the T-shaped protrusions 19, 20.

Furthermore, the mounting clip 15 comprises another protrusion 26 which is mounted on a spring arm 27. The protrusion 26 is pressed towards the mounting clip 15 during mounting of the manifold 2 and then springs outwards in direction of the housing 8 when the manifold 2 has reached its final position. In this state the protrusion enters a depression 28 in the housing, which is shown in Fig. 2. Thus, the manifold 2 is held in both directions perpendicular to the longitudinal extension of the mounting rail 1.

Since the mounting clips 15 can be slided on the mounting rail 1 in the longitudinal direction of the mounting rail 1, the position of the mounting clips can easily be adapted to the positions of the respective functional elements on the manifold 2.

The manifold 2 extends parallel to the longitudinal extension of the mounting rail 1. Thus, the manifold 2 can be connected to the mounting rail 1 not only in one position, but in a plurality of positions. In the embodiment shown, the manifold 2 is connected to the mounting rail 1 at three positions, so that three mounting clips 15 are used.

It is not necessary to fix every functional element 4, 5 to the mounting rail 1. In the present example, only every third functional element is fixed to the mounting rail 1.

## Claims

1. Manifold arrangement of a heating or cooling system comprising a manifold (2) and means for fixing the manifold (2) to a part of a building, wherein the fixing means comprise a mounting rail (1) which runs parallel to the manifold (2), **characterized in that** at least one mounting clip (15) is clipped to the mounting rail (1), wherein the manifold (2) is connected to the mounting clip (15) which comprises a track arrangement (18) running perpendicular to a longitudinal extension of the mounting rail (1) and having a geometry, wherein the manifold (2) comprises a mounting member (23) with a corresponding counter geometry, configured for engagement with the track arrangement geometry.

2. Manifold arrangement according to claim 1, **characterized in that** the mounting rail (1) comprises a U shape cross section having a base (9) and a flange (10, 11) at each side of the base (9), wherein the flanges (10, 11) comprise end sections (12, 13) running parallel to the base (9).

3. Manifold arrangement according to claim 1 or 2, **characterized in that** the mounting clip (15) is clipped on the mounting rail (1).

4. Manifold arrangement according to any of claims 1 to 3, **characterized in that** the mounting clip (15) can be shifted on the mounting rail (1) in a longitudinal direction of the mounting rail (1).

5. Manifold arrangement according to any of claims 1 to 4, **characterized in that** the manifold (2) comprises a tube (3) and at least one functional part (4, 5) having a housing (8) on an outside of the tube (3), wherein the mounting member (23) is connected to the housing (8) of the functional part (4, 5).

6. Manifold arrangement according to claim 5, **characterized in that** the mounting member (23) is integral with the housing (8) of the functional part (4, 5).

7. Manifold arrangement according to any of claims 1 to 6, **characterized in that** the track arrangement (18) comprises at least one groove (21, 22) which is open in a direction parallel to the longitudinal extension of the mounting rail (1) and the mounting member (23) comprises a protrusion arranged in the groove (21, 22).

8. Manifold arrangement according to any of claims 1 to 7, **characterized in that** the track arrangement (18) comprises an end stop.

9. Manifold arrangement according to any of claims 1 to 8, **characterized in that** the mounting clip (15) comprises a protrusion (26) arranged on spring means (27) of the mounting clip.

10. Manifold arrangement according to claim 9, **characterized in that** the spring means (27) is formed by an elastic arm of the mounting clip.

## Patentansprüche

1. Verteileranordnung eines Heiz- oder Kühlsystems, umfassend einen Verteiler (2) und Mittel zum Befestigen des Verteilers (2) an einem Teil eines Gebäudes, wobei die Befestigungsmittel eine Montageleiste (1) umfassen, die parallel zu dem Verteiler (2) verläuft, **dadurch gekennzeichnet, dass** mindestens eine Montageklammer (15) an die Montageleiste (1) geklammert ist, wobei der Verteiler (2) mit der Montageklammer (15) verbunden ist, die eine Schienenanordnung (18) umfasst, die senkrecht zu einer Längserstreckung der Montageleiste (1) verläuft und eine Geometrie aufweist, wobei der Verteiler (2) ein Montageglied (23) mit einer entsprechenden Gegengeometrie umfasst, die für einen Eingriff mit der Schienenanordnungsgeometrie ausgelegt ist.

2. Verteileranordnung nach Anspruch 1, **dadurch gekennzeichnet, dass** die Montageleiste (1) einen U-förmigen Querschnitt mit einer Basis (9) und einem Flansch (10, 11) an jeder Seite der Basis (9) umfasst, wobei die Flansche (10, 11) Endabschnitte (12, 13) umfassen, die parallel zu der Basis (9) verlaufen.

3. Verteileranordnung nach Anspruch 1 oder 2, **dadurch gekennzeichnet, dass** die Montageklammer (15) auf die Montageleiste (1) geklammert ist.

4. Verteileranordnung nach einem der Ansprüche 1 bis 3, **dadurch gekennzeichnet, dass** die Montageklammer (15) auf der Montageleiste (1) in einer Längsrichtung der Montageleiste (1) verschoben werden kann.

5. Verteileranordnung nach einem der Ansprüche 1 bis 4, **dadurch gekennzeichnet, dass** der Verteiler (2) ein Rohr (3) und mindestens einen Funktionsteil (4, 5) mit einem Gehäuse (8) auf einer Außenseite des Rohrs (3) umfasst, wobei das Montageglied (23) mit dem Gehäuse (8) des Funktionsteils (4, 5) verbunden ist.

6. Verteileranordnung nach Anspruch 5, **dadurch gekennzeichnet, dass** das Montageglied (23) integral mit dem Gehäuse (8) des Funktionsteils (4, 5) ist.

7. Verteileranordnung nach einem der Ansprüche 1 bis 6, **dadurch gekennzeichnet, dass** die Schienenanordnung (18) mindestens eine Nut (21, 22) umfasst, die in einer Richtung parallel zu der Längserstreckung der Montageleiste (1) offen ist, und das Montageglied (23) einen Vorsprung umfasst, der in der Nut (21, 22) angeordnet ist.

8. Verteileranordnung nach einem der Ansprüche 1 bis 7, **dadurch gekennzeichnet, dass** die Schienenanordnung (18) einen Endanschlag umfasst.

9. Verteileranordnung nach einem der Ansprüche 1 bis 8, **dadurch gekennzeichnet, dass** die Montageklammer (15) einen Vorsprung (26) umfasst, der auf einem Federmittel (27) der Montageklammer angeordnet ist.

10. Verteileranordnung nach Anspruch 9, **dadurch gekennzeichnet, dass** das Federmittel (27) durch einen elastischen Arm der Montageklammer gebildet ist.

## Revendications

1. Structure de collecteur d'un système de chauffage ou de refroidissement comprenant un collecteur (2) et des moyens pour fixer le collecteur (2) à une partie d'un bâtiment, les moyens de fixation comprenant un rail de montage (1) qui s'étend parallèlement au collecteur (2), **caractérisée en ce qu'**au moins une attache de montage (15) est attachée au rail de montage (1) par emboîtement-pression, le collecteur (2) étant raccordé à l'attache de montage (15) qui comprend une structure de glissière (18) s'étendant perpendiculairement à une étendue longitudinale du rail de montage (1) et présentant une certaine géométrie, le collecteur (2) comprenant un élément de montage (23) présentant une géométrie correspondante complémentaire, conçue pour entrer en prise avec la géométrie de la structure de glissière.

2. Structure de collecteur selon la revendication 1, **caractérisée en ce que** le rail de montage (1) comprend une section transversale en forme de U comportant une base (9) et une ailette (10, 11) de chaque côté de la base (9), les ailettes (10, 11) comprenant des sections d'extrémité (12, 13) s'étendant parallèlement à la base (9) .

3. Structure de collecteur selon la revendication 1 ou 2, **caractérisée en ce que** l'attache de montage (15) est attachée sur le rail de montage (1) par emboîtement-pression.

4. Structure de collecteur selon l'une quelconque des revendications 1 à 3, **caractérisée en ce que** l'attache de montage (15) peut être déplacée sur le rail de montage (1) dans une direction longitudinale du rail de montage (1) .

5. Structure de collecteur selon l'une quelconque des revendications 1 à 4, **caractérisée en ce que** le collecteur (2) comprend un tube (3) et au moins une partie fonctionnelle (4, 5) comportant un logement (8) sur une partie extérieure du tube (3), l'élément de montage (23) étant raccordé au logement (8) de la partie fonctionnelle (4, 5).

6. Structure de collecteur selon la revendication 5, **caractérisée en ce que** l'élément de montage (23) fait partie intégrante du logement (8) de la partie fonctionnelle (4, 5).

7. Structure de collecteur selon l'une quelconque des revendications 1 à 6, **caractérisée en ce que** la structure de glissière (18) comprend au moins une rainure (21, 22) qui est ouverte dans une direction parallèle à l'étendue longitudinale du rail de montage (1) et l'élément de montage (23) comprend une saillie placée dans la rainure (21, 22).

8. Structure de collecteur selon l'une quelconque des revendications 1 à 7, **caractérisée en ce que** la structure de glissière (18) comprend une butée d'extrémité.

9. Structure de collecteur selon l'une quelconque des revendications 1 à 8, **caractérisée en ce que** l'attache de montage (15) comprend une saillie (26) située sur un moyen élastique (27) de l'attache de montage.

10. Structure de collecteur selon la revendication 9, **caractérisée en ce que** le moyen élastique (27) est formé par un bras élastique de l'attache de montage.
